# EUROPEAN PATENT SPECIFICATION

(11) **EP 3 013 001 B1**
(45) Date of publication and mention of the grant of the patent: **05.09.2018**
(21) Application number: 14825981.5
(22) Date of filing: 01.07.2014
(51) Int. Cl.: H04L 12/26, H04L 29/08, H04L 12/24

(54) **SERVICE QUALITY INDEX CALCULATION METHOD AND CALCULATION APPARATUS, AND COMMUNICATIONS SYSTEM**
KALKULATIONSVERFAHREN FÜR DIENSTGÜTEINDEX UND KALKULATIONSVORRICHTUNG SOWIE KOMMUNIKATIONSSYSTEM
PROCÉDÉ ET APPAREIL DE CALCUL D'UN INDICE DE QUALITÉ DE SERVICE, ET SYSTÈME DE COMMUNICATIONS

(30) Priority: 17.07.2013 CN 201310300586
(43) Date of publication of application: 27.04.2016
(73) Proprietor: Huawei Technologies Co., Ltd., Longgang District Shenzhen, Guangdong 518129 (CN)
(72) Inventor: CHEN, Xin, Shenzhen Guangdong 518129 (CN); YE, Jiantao, Shenzhen Guangdong 518129 (CN); ZHOU, Suping, Shenzhen Guangdong 518129 (CN); ZHAO, Jie, Shenzhen Guangdong 518129 (CN); NIU, Weiguo, Shenzhen Guangdong 518129 (CN)
(74) Representative: Maiwald Patent- und Rechtsanwaltsgesellschaft mbH
(86) International application number: PCT/CN2014/081329
(87) International publication number: WO 2015/007154

(56) References cited:
- CN-A- 102 361 484
- CN-A- 102 685 791
- CN-A- 102 752 792
- CN-A- 103 051 498
- US-A1- 2003 217 144
- US-A1- 2005 021 736
- US-A1- 2005 262 104

## Description

### TECHNICAL FIELD

The present application relates to the field of communications service technologies, and in particular, to a method for calculating a service quality indicator in a web page browsing service, an apparatus for calculating a service quality indicator in a web page browsing service, and a communications system.

### BACKGROUND

With rapid development of MBB (Mobile Broadband, mobile broadband), service types on user equipment are increasingly rich. An operator who provides richer services can attract more users. However, attracting a user does not represent retaining the user. If service quality provided by the operator is relatively poor, service experience of a user is relatively poor, thereby causing user churn, and reducing income of the operator. Therefore, the operator needs to monitor service experience of a user. A web page browsing service is a frequently used service; therefore, it is critical for the operator to acquire a user's service experience in the web page browsing service.

US 2003/217144 A1 describes a method for reconstructing client web page accesses that comprises capturing network-level information for client accesses of at least one web page. The method further comprises constructing a knowledge base of reliable information identifying content of at least one web page, and reconstructing at least one client web page access from the captured network-level information using the reliable information of the knowledge base.

To measure effects of various factors on service experience, the TMF (TeleManagement Forum, TeleManagement Forum) proposes an SQM (Service Quality Management, service quality management) system. This system mainly collects and analyzes data that affects service experience, so as to implement user-centered end-to-end service quality monitoring and management, and help an operator learn about a cause to deterioration in the service experience, thereby rapidly improving the service experience. However, the TMF does not clearly specify how to obtain, by using related data in a conventional communications network, a key indicator to constitute the SQM.

Therefore, a KPI (Key Performance Indicator, key performance indicator) is proposed in the prior art. The KPI describes performance of devices such as a network element based on a network layer in the conventional communications network, includes a group of parameters that can be monitored and measured, and is most commonly used by operators. The KPI includes specific parameters, but the parameters of the KPI mainly focus on a signaling plane, and is insufficient to reflect performance of a user plane, so that user-centered end-to-end service quality monitoring and management cannot be directly provided. In many situations, the KPI may reach a relatively high level, but this does not necessarily indicate good service experience of a user.

In additon to the KPI, there is further a service quality indicator or a key quality indicator (KQI, Key Quality Indicator). The service quality indicator is user-centered, and is an indicator to measure service experience. Therefore, acquiring a correct, comprehensive, and real service quality indicator is a key to and a basis of the SQM.

As described above, the web page browsing service is a frequently used service, and is also a critical service in the conventional communications network. A protocol mainly used in the web page browsing service is HTTP (Hyper Text Transfer Protocol, Hyper Text Transfer Protocol), where the HTTP is generally based on a connection manner of TCP (Transmission Control Protocol, Transmission Control Protocol). When a user browses a web page, packets are sent to a network server, and the network server responds to these packets. If success responses are received for these packets, the web page is presented to the user.

In the prior art, a service quality indicator of web page browsing is calculated in a unit of a single request packet and a single response packet, and therefore, a response delay, a data transmission rate, a packer loss rate, and the like that are based on the single request packet and the single response packet are calculated.

The inventor of the present application finds in long term research and development that: when a user browses a web page, multiple TCP connections are set up to a network server, and multiple packets are sent over each TCP connection, that is, one time of web page browsing generates multiple packets. As a result, a service quality indicator calculated in the prior art cannot truly reflect service experience of the user because: In a particular time of web page browsing, a web page display speed is slow, but because the service quality indicator is specific only to a packet, and there are multiple packets, a calculation result may be that some values are very large and some values are very small, making it difficult to reflect true service experience of the user. Therefore, a service quality indicator calculating manner in the prior art has no obvious effect for the operator.

### SUMMARY

In view of this, the present application provides a service quality indicator calculating method and calculating apparatus, and a communications system, to solve a problem in the prior art that a service quality indicator of one time of web page browsing cannot be calculated.

To solve the foregoing problem, a first aspect of the present application provides a method for calculating a service quality indicator in a web page browsing service, including: collecting multiple packets related to the web page browsing service; determining packets generated in a same time of web page browsing; and calculating a service quality indicator of the web page browsing according to the packets generated in the same time of web page browsing.

With reference to the first aspect, in a first possible implementation manner, the packets include a request packet and a response packet, and the step of the determining packets generated in a same time of web page browsing includes: sequentially comparing a currently extracted request packet with a previously extracted request packet or a response packet corresponding to a previously extracted request packet, so as to determine whether the packets are generated in the same time of web page browsing; and if it is determined that the packets are generated in the same time of web page browsing, extracting a next request packet for comparison.

With reference to the first possible implementation manner of the first aspect, in a second possible implementation manner, the step of the sequentially comparing a currently extracted request packet with a previously extracted request packet or a response packet corresponding to a previously extracted request packet, so as to determine whether the packets are generated in the same time of web page browsing includes: determining whether a time difference between a collection time of the currently extracted request packet and a collection time of the previously extracted request packet or the response packet corresponding to the previously extracted request packet is less than a first preset threshold; and if the time difference is less than the first preset threshold, determining that the currently extracted request packet and the previously extracted request packet are generated in the same time of web page browsing.

With reference to the second possible implementation manner of the first aspect, in a third possible implementation manner, the method includes: if the time difference is greater than or equal to the first preset threshold, comparing first packet data of the currently extracted request packet with second packet data of the previously extracted request packet or third packet data of the response packet corresponding to the previously extracted request packet; if the first packet data is the same as the second packet data, and the time difference between the collection time of the currently extracted request packet and the collection time of the previously extracted request packet is less than a second preset threshold, determining that the currently extracted request packet and the previously extracted request packet are generated in the same time of web page browsing; or if the first packet data is the same as the third packet data, and the time difference between the collection time of the currently extracted request packet and the collection time of the response packet corresponding to the previously extracted request packet is less than a second preset threshold, determining that the currently extracted request packet and the previously extracted request packet are generated in the same time of web page browsing.

With reference to the third possible implementation manner of the first aspect, in a fourth possible implementation manner, if the first packet data is compared with the third packet data, the first packet data is URL information, and the third packet data is location field information.

With reference to the third possible implementation manner of the first aspect, in a fifth possible implementation manner, if the first packet data is compared with the second packet data, the first packet data is reference field information, and the second packet data is URL information or reference field information; or the first packet data is host field information, and the second packet data is host field information.

With reference to the third possible implementation manner of the first aspect, in a sixth possible implementation manner, the first preset threshold is less than the second preset threshold.

With reference to the first possible implementation manner of the first aspect, in a seventh possible implementation manner, the step of the determining packets generated in a same time of web page browsing further includes: sorting, according to a sequence of collection times, packets generated during each time of web page browsing.

With reference to any one of the first to the seventh possible implementation manners of the first aspect, in an eighth possible implementation manner, the service quality indicator includes at least one of a web page response delay, a web page redirection delay, a web page data amount, a web page display delay, and a web page display success rate, where the web page response delay is a time difference between a collection time of the first request packet and a collection time of the first response packet in one time of web page browsing; the web page redirection delay is a time difference between a collection time of a request packet that triggers redirection and a collection time of a request packet sent when the redirection succeeds in one time of web page browsing; the web page data amount is a total data amount of all response packets in one time of web page browsing, and the response packets are not repeated; the web page display delay is a time difference between a collection time of the first sent or received packet and a collection time of the last packet in one time of web page browsing; and the web page display success rate is a ratio of a quantity of success response packets to a quantity of all response packets in one time of web page browsing.

With reference to the eighth possible implementation manner of the first aspect, in a ninth possible implementation manner, if the packets further include a TCP setup packet used to set up a TCP connection or a DNS request packet used to perform domain name resolution, the web page response delay is a time difference between a collection time of the first TCP setup packet and a collection time of the first response packet in one time of web page browsing or a time difference between a collection time of a DNS request packet and a collection time of the first response packet in one time of web page browsing.

With reference to the first aspect or any one of the first to the seventh possible implementation manners of the first aspect, in a tenth possible implementation manner, the calculating method further includes: collecting statistics on an average value of service quality indicators of multiple times of web page browsing initiated from a same user address within a specific period of time at a same server address or a same host address, or an average value of service quality indicators of multiple times of web page browsing initiated from different user addresses at a same server address or a same host address.

To solve the foregoing problem, a second aspect of the present application provides an apparatus for calculating a service quality indicator in a web page browsing service, including a collecting module, an analyzing module, and a calculating module, where: the collecting module is configured to collect multiple packets related to the web page browsing service and send the multiple collected packets to the analyzing module; the analyzing module is configured to receive the multiple collected packets from the collecting module and determine packets generated in a same time of web page browsing; and the calculating module is configured to calculate a service quality indicator of the web page browsing according to the packets generated in the same time of web page browsing.

With reference to the second aspect, in a first possible implementation manner, the packets include a request packet and a response packet, and the analyzing module includes an extracting unit and a comparing unit, where: the extracting unit is configured to extract the multiple request packets according to a preset sequence; the comparing unit is configured to sequentially compare a currently extracted request packet with a previously extracted request packet or a response packet corresponding to a previously extracted request packet, so as to determine whether the packets are generated in a same time of web page browsing; and the extracting unit is further configured to: when the comparing unit determines that the packets are generated in the same time of web page browsing, extract a next request packet for the comparing unit to perform comparison.

With reference to the first possible implementation manner of the second aspect, in a second possible implementation manner, the comparing unit includes a first judging unit and a determining unit, where: the first judging unit is configured to determine whether a time difference between a collection time of the currently extracted request packet and a collection time of the previously extracted request packet or the response packet corresponding to the previously extracted request packet is less than a first preset threshold; and the determining unit is configured to: when the time difference is less than the first preset threshold, determine that the currently extracted request packet and the previously extracted request packet are generated in the same time of web page browsing.

With reference to the second possible implementation manner of the second aspect, in a third possible implementation manner, the comparing unit further includes a second judging unit and a third judging unit, where: the second judging unit is configured to: when the time difference is greater than or equal to the first preset threshold, compare first packet data of the currently extracted request packet with second packet data of the previously extracted request packet or third packet data of the response packet corresponding to the previously extracted request packet; the third judging unit is configured to: when the first packet data is the same as the second packet data, determine whether the time difference between the collection time of the currently extracted request packet and the collection time of the previously extracted request packet is less than a second preset threshold; or when the first packet data is the same as the third packet data, determine whether the time difference between the collection time of the currently extracted request packet and the collection time of the previously extracted request packet is less than a second preset threshold; and the determining unit is further configured to: when the third judging unit determines that the time difference is less than the second preset threshold, determine that the currently extracted request packet and the previously extracted request packet are generated in the same time of web page browsing.

With reference to the third possible implementation manner of the second aspect, in a fourth possible implementation manner, when the second judging unit compares the first packet data with the third packet data, the first packet data is URL information, and the third packet data is location field information.

With reference to the third possible implementation manner of the second aspect, in a fifth possible implementation manner, when the second judging unit compares the first packet data with the second packet data, the first packet data is reference field information, and the second packet data is URL information or reference field information; or the first packet data is host field information, and the second packet data is host field information.

With reference to the third possible implementation manner of the second aspect, in a sixth possible implementation manner, the first preset threshold is less than the second preset threshold.

With reference to the first possible implementation manner of the second aspect, in a seventh possible implementation manner, the analyzing module further includes a sorting unit, where the sorting unit is configured to sort, according to a sequence of collection times, packets generated during each time of web page browsing.

With reference to any one of the first to the seventh possible implementation manners of the second aspect, in an eighth possible implementation manner, the service quality indicator includes at least one of a web page response delay, a web page redirection delay, a web page data amount, a web page display delay, and a web page display success rate.

With reference to the second aspect or any one of the first to the seventh possible implementation manners of the second aspect, in a ninth possible implementation manner, the calculating apparatus further includes a statistics collecting module, where the statistics collecting module is configured to collect statistics on an average value of service quality indicators of multiple times of web page browsing initiated from a same user address within a specific period of time at a same server address or a same host address, or an average value of service quality indicators of multiple times of web page browsing initiated from different user addresses at a same server address or a same host address.

To solve the foregoing problem, a third aspect of the present application provides a communications system, where the communications system includes a network server and at least one user equipment, and the at least one user equipment communicates with the network server by using a wired or wireless network, so as to perform a web page browsing service, where the communications system further includes any one of the foregoing calculating apparatus, and the calculating apparatus is disposed in the at least one user equipment or accesses the wired or wireless network.

With reference to the third aspect, in a first possible implementation manner, if the calculating apparatus accesses the wired or wireless network, the calculating apparatus collects, according to a user address of each user equipment, multiple packets related to the web page browsing service.

According to the service quality indicator calculating method and calculating apparatus, and the communications system in the present application, all packets generated in a same time of web page browsing are determined in multiple collected packets related to a web page browsing service, so that a service quality indicator of each time of web page browsing is calculated according to these packets, which can solve a problem in the prior art that a service quality indicator of one time of web page browsing cannot be calculated. The service quality indicator obtained by means of calculation can more truly reflect service experience of a user.

### BRIEF DESCRIPTION OF DRAWINGS

FIG. 1 is a schematic flowchart of a first embodiment of a method for calculating a service quality indicator in a web page browsing service according to the present application;
FIG. 2 is a schematic flowchart of a second embodiment of a method for calculating a service quality indicator in a web page browsing service according to the present application;
FIG. 3A and FIG. 3B are a schematic flowchart of a third embodiment of a method for calculating a service quality indicator in a web page browsing service according to the present application;
FIG. 4 is a schematic diagram of a request packet and a response packet collected in the calculating method shown in FIG. 3A and FIG. 3B;
FIG. 5 is a schematic structural diagram of a first embodiment of an apparatus for calculating a service quality indicator in a web page browsing service according to the present application;
FIG. 6 is a schematic structural diagram of a second embodiment of an apparatus for calculating a service quality indicator in a web page browsing service according to the present application;
FIG. 7 is a schematic structural diagram of a third embodiment of an apparatus for calculating a service quality indicator in a web page browsing service according to the present application;
FIG. 8 is a schematic structural diagram of an embodiment of a communications system according to the present application;
FIG. 9 is a schematic diagram of an application scenario of the communications system shown in FIG. 8;
FIG. 10 is a schematic diagram of another application scenario of the communications system shown in FIG. 8; and
FIG. 11 is a schematic structural diagram of a fourth embodiment of an apparatus for calculating a service quality indicator in a web page browsing service according to the present application.

### DESCRIPTION OF EMBODIMENTS

In the following description, specific details such as a particular system structure, an interface, and a technology are set forth in an illustrative but not a restrictive sense to make a thorough understanding of the present application. However, a person skilled in the art should know that the present application may be practiced in other embodiments without these specific details. In other cases, detailed descriptions of well-known apparatuses, circuits, and methods are omitted, so that the present application is described without being obscured by unnecessary details.

The following descriptions are made with reference to the accompanying drawings and specific embodiments.

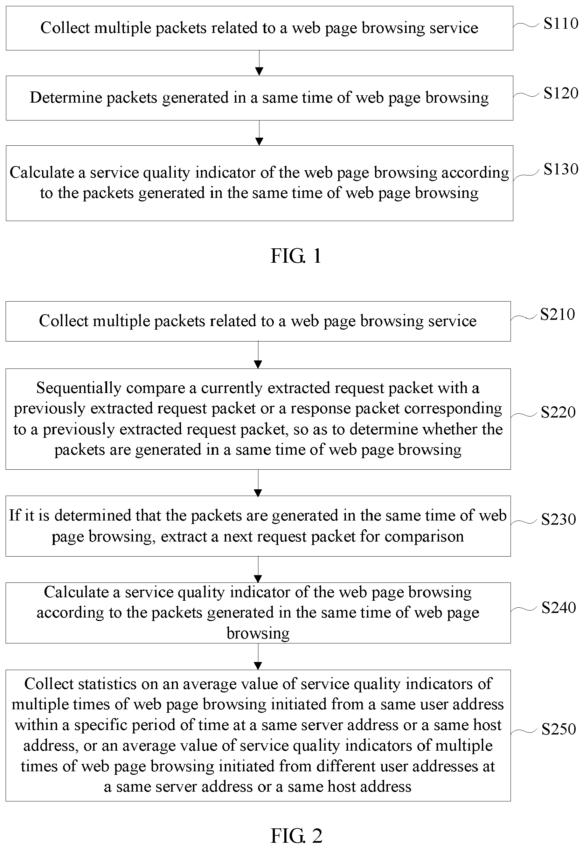

Referring to FIG. 1, FIG. 1 is a schematic flowchart of a first embodiment of a method for calculating a service quality indicator in a web page browsing service according to the present application. The calculating method includes the following steps:

Step S110: Collect multiple packets related to a web page browsing service.

When a user uses services provided by an operator, many packets may be generated. These services may be divided into many types that include a web page browsing service, a VOIP (Voice over Internet Protocol, Voice over Internet Protocol) service, an email service, a video service, and the like. A packet of each type of service has a different structure and format; therefore, when a packet is being collected, a packet of another service may be filtered out according to a structure and a format of the packet, so as to obtain a packet related to a web page browsing service. A packet generated in a web page browsing process may be considered as a packet related to the web page browsing service.

During web page browsing, a generally used protocol is HTTP, WAP (Wireless Application Protocol, Wireless Application Protocol), and the like. Correspondingly, the packets include a request packet and a response packet of HTTP or WAP. In addition, before the request packet is sent, a TCP connection needs to be set up first sometimes, and even domain name resolution needs to be performed; therefore, the packets may further include a TCP setup packet, a TCP release packet, a DNS (Domain Name System, domain name system) packet used to perform domain name resolution, and the like.

Therefore, collecting the packet related to the web page browsing service may be collecting a DNS packet, a TCP setup packet, a request packet, and a response packet. The request packet includes a request line, a request header, and a request body. The response packet includes a status line, a response header, and a response body.

The following uses an example to describe a web page browsing process:

When a user inputs a website or opens a web page link to visit a web page, a TCP connection may be set up to a network server according to a requirement, and then a request packet is sent to the network server. A request line includes a URL (Uniform Resource Locator, uniform resource locator), that is, a requested object. After receiving the request packet, the network server returns one or more response packets. A status line of a response packet indicates whether the response packet is normal. If everything is normal, the network server subsequently sends web page data to the user, so that the user can start web page browsing. In the foregoing process, because multiple TCP connections may be set up to the network server when one web page is being browsed, a quantity of request and response packets generated in the TCP connections may be different from each other.

Step S120: Determine packets generated in a same time of web page browsing.

The collected packets may be generated when the user browses a web page at different times, or may be generated when the user browses different web pages; therefore, it is required to determine packets generated in a same time of web page browsing. After it is determined that all packets are separately generated in which time of web page browsing, all packets generated in a same time of web page browsing may be classified.

Step S130: Calculate a service quality indicator of the web page browsing according to the packets generated in the same time of web page browsing.

After packets generated in each time of web page browsing are determined, parameters such as a web page size and a web page presentation time in each time of web page browsing may be reflected by using these packets. All these parameters belong to content of the service quality indicator. In this embodiment, the service quality indicator includes at least one of parameters such as a web page response delay, a web page redirection delay, a web page data amount, a web page display delay, or a web page display success rate.

According to the method for calculating a service quality indicator in a web page browsing service in the present application, all packets generated in a same time of web page browsing are determined in multiple collected packets related to a web page browsing service, so that a service quality indicator of each time of web page browsing is calculated according to these packets, which can solve a problem in the prior art that a service quality indicator of one time of web page browsing cannot be calculated. The service quality indicator obtained by means of calculation can more truly reflect service experience of a user, so that an operator can accurately control the service experience of the user according to the service quality indicator.

Referring to FIG. 2, FIG. 2 is a schematic flowchart of a second embodiment of a method for calculating a service quality indicator in a web page browsing service according to the present application. The calculating method includes the following steps:

Step S210: Collect multiple packets related to a web page browsing service.

Step S220: Sequentially compare a currently extracted request packet with a previously extracted request packet or a response packet corresponding to a previously extracted request packet, so as to determine whether the packets are generated in a same time of web page browsing.

The packets include a request packet and a response packet, and if a request packet is successfully fulfilled, the request packet has at least one corresponding response packet. Therefore, an object for comparison may be a collection time of the request packet or the response packet, or may be packet data of the request packet or the response packet. The packet data of the request packet is data included in a request line, a request header, and a request body of the request packet. The packet data of the response packet is data included in a status line, a response header, and a response body. If two request packets are associated in collection time or packet data, it may be considered that the two request packets are generated in a same time of web page browsing.

If the currently extracted request packet is the first request packet, a next request packet is further extracted, so as to ensure that during comparison, there is at least one previously extracted request packet and response packet. In this embodiment, a request packet and a response packet are extracted according to a preset sequence, where the preset sequence is preferably a sequence of collection times of request packets.

Comparison between the currently extracted request packet and the response packet corresponding to the previously extracted request packet is performed in a case of web page redirection. Specifically, after the previously extracted request packet is sent, a received response packet indicates that web page redirection occurs, where the response packet may instruct to resend a request packet. If the currently extracted request packet is the resent request packet, the currently extracted request packet is associated with the response packet corresponding to the previously extracted request packet, and it can still be determined that the currently extracted request packet and the previously extracted request packet are generated in a same time of web page browsing. Therefore, when the currently extracted request packet is compared with the previously extracted request packet, and it cannot be determined whether the packets are generated in a same time of web page browsing, the currently extracted request packet can be compared with the response packet corresponding to the previously extracted request packet.

Step S230: If it is determined that the packets are generated in the same time of web page browsing, extract a next request packet for comparison.

After the currently extracted request packet is compared with all previously extracted request packets or response packets, the next request packet is extracted for comparison, that is, the foregoing comparison process is repeated until all request packets or response packets are extracted. In this embodiment, if there are multiple previously extracted request packets and response packets, when it is determined for the first time that the currently extracted request packet and a request packet in the previously extracted request packets are generated in a same time of web page browsing, comparison stops, and a next request packet is further extracted. The foregoing comparison process is repeated so as to reduce a quantity of comparison times and save time as much as possible. For example, assuming that there are three previously extracted request packets, which are respectively represented by A, B, and C, A is generated in one time of web page browsing, B and C are generated in another time of web page browsing, and a currently extracted request packet is represented by D, during comparison, D is first compared with A, and after it is determined that the two are not generated in a same time of web page browsing, D is compared with B; and assuming that the two are generated in a same time of web page browsing, after it is determined that the two are generated in the same time of web page browsing, D is no longer compared with C; because B and C are generated in a same time of web page browsing, and D and B are generated in the same time of web page browsing, it can be concluded that D and C are definitely generated in a same time of web page browsing, and therefore comparison stops in this case to reduce a quantity of comparison times and save time.

Step S240: Calculate a service quality indicator of the web page browsing according to the packets generated in the same time of web page browsing.

After the packets generated in the same time of web page browsing are determined, times of web page browsing may also be determined. In this way, a service quality indicator of each time of web page browsing can be calculated.

Step S250: Collect statistics on an average value of service quality indicators of multiple times of web page browsing initiated from a same user address within a specific period of time at a same server address or a same host address, or an average value of service quality indicators of multiple times of web page browsing initiated from different user addresses at a same server address or a same host address.

A service quality indicator of a single time of web page browsing may be insufficient to reflect service experience of a user, and it is required to collect statistics on service quality indicators of multiple times of web page browsing to generally reflect the service experience of the user. For example, assuming that all request packets are generated in three times of web page browsing, three sets of service quality indicators are obtained by means of calculation according to the three times of web page browsing, where the three times of web page browsing may be from a same user address or different user addresses. By calculating an average value of the three sets of service quality indicators, the service experience of the user can be generally reflected.

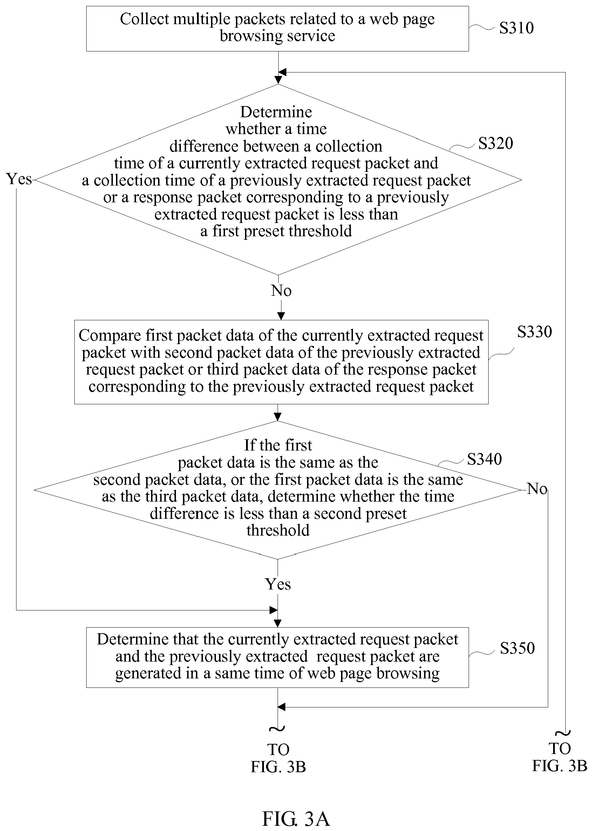

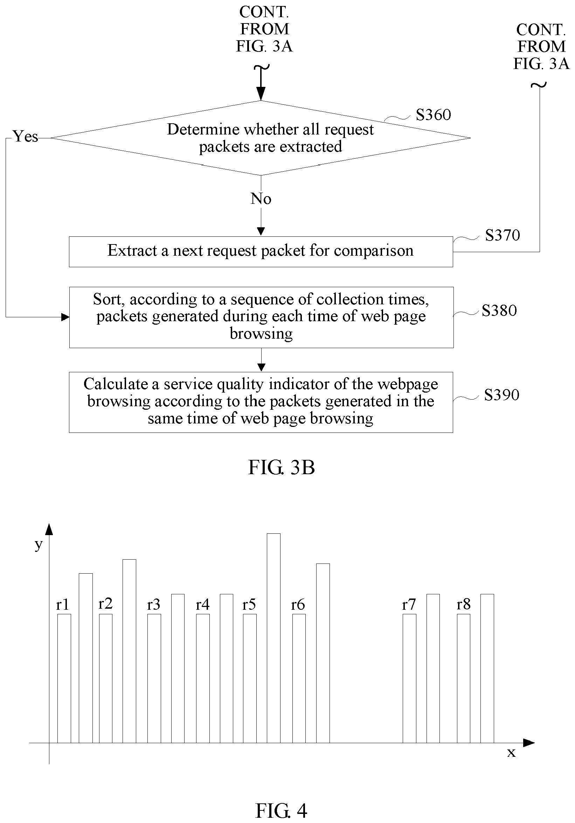

Referring to FIG. 3A and FIG. 3B, FIG. 3A and FIG. 3B are a schematic flowchart of a third embodiment of a method for calculating a service quality indicator in a web page browsing service according to the present application. The calculating method includes the following steps:

Step S310: Collect multiple packets related to a web page browsing service.

Step S320: Determine whether a time difference between a collection time of a currently extracted request packet and a collection time of a previously extracted request packet or a response packet corresponding to a previously extracted request packet is less than a first preset threshold, where if the time difference is less than the first preset threshold, perform step S350; and if the time difference is not less than the first preset threshold, perform step S330.

If the currently extracted request packet and the previously extracted request packet or the response packet corresponding to the previously extracted request packet are very close in collection time, it may be considered that the two request packets are sent during a same time of web page browsing. A preset threshold may be set to be as small as possible so as to improve accuracy of determining.

Step S330: Compare first packet data of the currently extracted request packet with second packet data of the previously extracted request packet or third packet data of the response packet corresponding to the previously extracted request packet.

Packet data includes many types of field information, and most field information can be used for comparison. The following provides descriptions by using specific cases. It is assumed that a user visits a particular portal site when browsing a web page, where a host address of the portal site is www.abc.com, the portal site includes a forum section and a news section, and the news section includes columns such as sports, entertainment, and education.

In the first case, if the first packet data is compared with the third packet data, the first packet data is URL information, and the third packet data is location field information. Therefore, it may be determined whether the currently extracted request packet is caused by redirection triggered by the previously extracted request packet.

A response header of a response packet is used to transfer additional response information, information about the network server, and information about further accessing a resource that is identified by a URI (Uniform Resource Identifier, uniform resource identifier) requested by the request packet that cannot be stored in a status line by the network server, and a URL is a part of the URI. A common response header includes location (Location) field information. The location field information is used for redirection to a new URL.

If the location field information included in the response packet corresponding to the previously extracted request packet is www.abc.com, and the URL information of the currently extracted request packet is also www.abc.com, it may be determined that the currently extracted request packet is generated by redirection triggered by the previously extracted request packet, and it may be preliminarily considered that the two request packets are associated.

In the second case, if the first packet data is compared with the second packet data, the first packet data is reference field information, and the second packet data is URL information.

A request header of a request packet is allowed to transfer additional request information and information about a device used by a user to a network server. A common request header includes host (Host) field information, reference (Referer) field information, and Accept field information. The host field information is used to designate an Internet host and a port number of the Internet host that are of a requested URL; the reference field information is used to designate a source address of the requested URL, that is, to notify the network server which link or website the requested URL this time is from, and the network server may be allowed to generate a roll back linked list; the Accept field information is used to designate a type of information that a user is allowed to receive.

When the user browses the portal site and receives data of the news section, a browser automatically triggers a request and generates request packets, and what these request packets request are columns such as sports, entertainment, and education. Therefore, reference field information of these request packets becomes URL information corresponding to the news section. If the reference field information of the currently extracted request packet is the same as the URL information of the previously extracted request packet, it indicates that the currently extracted request packet can roll back to the URL information of the previously extracted request packet according to the reference field information of the currently extracted request packet, and it may be preliminarily considered that the two request packets are associated.

In the third case, if the first packet data is compared with the second packet data, the first packet data is reference field information, and the second packet data is reference field information.

When the user browses the portal site and receives data of the news section, a request is automatically triggered, and multiple request packets are generated. Assuming that the currently extracted request packet requests the sports column, and the previously extracted request packet requests the education column, reference field information of these request packets is the same and is URL information of the news section. Therefore, it may be preliminarily considered that the two request packets are associated.

In the fourth case, if the first packet data is compared with the second packet data, the first packet data is host field information, and the second packet data is host field information.

If the currently extracted request packet requests the news section, and the previously extracted request packet requests the forum section, host field information of these request packets is the same and is www.abc.com. Therefore, it may be preliminarily considered that the two request packets are associated.

In this embodiment, comparison may be preferably performed according to the second, the third, and the fourth cases, and if it cannot be determined that the packets are generated in a same time of web page browsing, comparison may further be performed according to the first case.

Step S340: If the first packet data is the same as the second packet data, or the first packet data is the same as the third packet data, determine whether the time difference is less than a second preset threshold, where if the time difference is less than the second preset threshold, perform step S350; and if the time difference is not less than the second preset threshold, perform step S360.

If it is considered that two request packets are associated, it still cannot be determined that the two request packets are generated in a same time of web page browsing. Because if collection times of the two request packets are several hours or even several days apart, it cannot be determined that the two request packets are generated in a same time of web page browsing. Therefore, the second preset threshold needs to be set so as to avoid the foregoing case. In this embodiment, the first preset threshold is less than the second preset threshold; for example, the first preset threshold is 1 second, and the second preset threshold is 1 minute.

Herein, determining the time difference includes two cases. The first case is that, if the first packet data is the same as the second packet data, it is determined that the time difference between the collection time of the currently extracted request packet and the collection time of the previously extracted request packet is less than the second preset threshold; the second case is that, if the first packet data is the same as the third packet data, it is determined that the time difference between the collection time of the currently extracted request packet and the collection time of the response request corresponding to the previously extracted request packet is less than the second preset threshold.

Step S350: Determine that the currently extracted request packet and the previously extracted request packet are generated in a same time of web page browsing.

In a case in which the first packet data is the same as the second packet data, or the first packet data is the same as the third packet data, and the foregoing time difference is less than the second preset threshold, it can be determined that the two request packets are generated in the same time of web page browsing. Further, by determining the packets generated in the same time of web page browsing, times of web page browsing that are corresponding to the packets can further be collected.

Step S360: Determine whether all request packets are extracted, where if all the request packets are extracted, perform step S380; and if not all the request packets are extracted, perform step S370.

Step S370: Extract a next request packet for comparison.

After the next request packet is extracted, step S320 is further performed until comparison of all the request packets is completed. For example, with reference to FIG. 4, FIG. 4 is a schematic diagram of a request packet and a response packet collected in the calculating method shown in FIG. 3A and FIG. 3B. A horizontal coordinate in the figure reflects a sequence of collection times, and a vertical coordinate reflects a size of a data amount. In the figure, a request packet and a response packet corresponding to the request packet are included in columnar parts r1, r2, r3, r4, r5, r6, r7, and r8, and the rest columnar parts represent objects requested by sent request packets. The columnar parts r1, r2, r3, r4, r5, and r6 are generated in one time of web page browsing, and r7 and r8 are generated in another time of web page browsing. When step S320 to step S370 are being performed, extracting starts from r1 to r8. After it is determined that r8 and r6 are not generated in a same time of web page browsing, it can be determined that r1, r2, r3, r4, r5, and r6 are generated in a same time of web page browsing, and further processing may be performed.

Step S380: Sort, according to a sequence of collection times, packets generated during each time of web page browsing.

After sorting is performed, a request packet whose collection time is the earliest is the first request packet, and a response packet corresponding to the first request packet is the first response packet; a request packet whose collection time is the last is the last request packet, and a response packet corresponding to the last request packet is the last response packet.

Step S390: Calculate a service quality indicator of the web page browsing according to the packets generated in the same time of web page browsing.

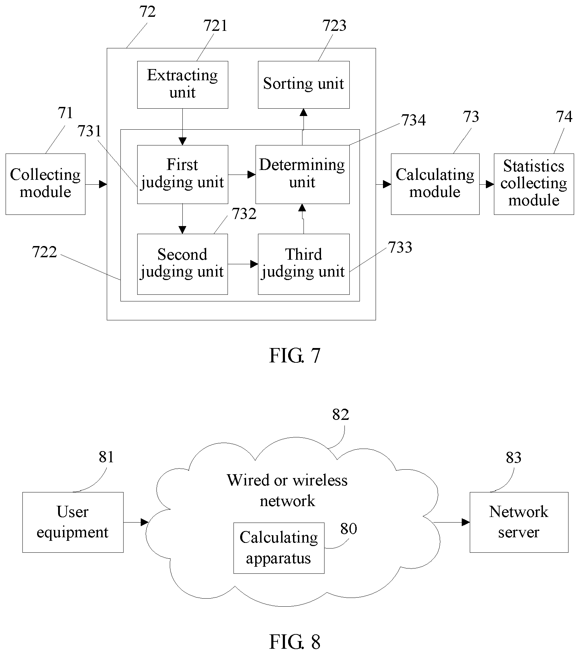

After all request packets generated in a same time of web page browsing are determined, response packets are also determined accordingly. A service quality indicator of this time of web page browsing can be calculated according to these request packets and response packets, that is, r1 to r6 in FIG. 8. If there are multiple times of web page browsing, a service quality indicator of each time of web page browsing can further be calculated.

In this embodiment, the service quality indicator includes at least one of a web page response delay, a web page redirection delay, a web page data amount, a web page display delay, and a web page display success rate.

The web page response delay is a response speed when a user browses a web page, and is a time difference between a collection time of the first request packet and a collection time of the first response packet in one time of web page browsing. If the packets further include a TCP setup packet used to set up a TCP connection, the web page response delay is a time difference between a collection time of the first TCP setup packet and a collection time of the first response packet in one time of web page browsing. The TCP setup packet may be an SYN (Synchronize Sequence Numbers, synchronize sequence number) request packet. If the packets further include a DNS request packet used to perform domain name resolution, the web page response delay is a time difference between a collection time of a DNS request packet and a collection time of the first response packet in one time of web page browsing.

The web page redirection delay is a time difference between a collection time of a request packet that triggers redirection and a collection time of a request packet sent when the redirection succeeds in one time of web page browsing. A redirection process is that a URL in a request line has changed or been transferred. After receiving a request packet, and when returning a response packet, a network server provides a new URL and response code in a status line. After a user receives the response code, redirection is determined, and a request packet is sent again, where a request object of the request packet is the new URL.

The web page data amount is a total data amount of all response packets in one time of web page browsing, and all the response packets are not repeated. A data amount of each response packet reflects a data amount requested by a request packet of the response packet, and a data amount of each time of web page browsing may be obtained from a total data amount of all response packets in each time of web page browsing.

The web page display delay is a time difference between a collection time of the first sent or received packet and a collection time of the last packet in one time of web page browsing. The first sent packet may be the first request packet, a TCP setup packet, a DNS request packet, or the like, and the first received packet may be the first response packet.

The web page display success rate is a ratio of a quantity of success response packets to a quantity of all response packets in one time of web page browsing. After some request packets are sent, if the network server does not respond or status code belongs to a wrong type, response packets indicate response failures; but some request packets are responded successfully, and response packets indicate response successes; therefore, the quantity of success response packets is less than or equal to the quantity of all response packets.

In addition, a web page display success identifier may further be set according to the web page display success rate. Specifically, a threshold may be set. When the web page display success rate exceeds the threshold, a web page display success can be determined, and a web page display success identifier is generated; otherwise, a web page display failure is determined.

It should be understood that this embodiment exemplarily lists a calculation process of merely some parameters of a service quality indicator, where these parameters all aim at one time of web page browsing. It is not excluded that another parameter of the service quality indicator may be calculated according to the present application; for example, a web page display rate and the like are calculated according to a web page size and a web page display delay.

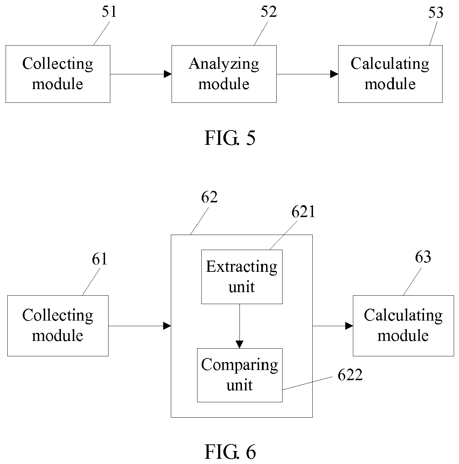

Referring to FIG. 5, FIG. 5 is a schematic structural diagram of a first embodiment of an apparatus for calculating a service quality indicator in a web page browsing service according to the present application. The calculating apparatus includes a collecting module 51, an analyzing module 52, and a calculating module 53.

The collecting module 51 is configured to collect multiple packets related to a web page browsing service and send the multiple collected packets to the analyzing module 52. Because a packet of the web page browsing service has a different structure and format from a packet of another service, when the collecting module 51 collects the packets, the packet of the another service may be filtered out according to the structure and the format of the packet, so as to obtain the packets related to the web page browsing service. The packets collected by the collecting module 51 include at least a request packet and a response packet, and may further include a TCP setup packet used to set up a TCP connection, a TCP release packet, and a DNS packet used to perform domain name resolution. In this embodiment, when collecting the packets, the collecting module 51 also records a collection time of each packet.

The analyzing module 52 is configured to receive the multiple collected packets from the collecting module 51 and determine packets generated in a same time of web page browsing. The packets collected by the collecting module 51 may be generated when a user browses a web page at different times, or may be generated when a user browses different web pages; therefore, it is required to determine the packets generated in the same time of web page browsing. The analyzing module 52 can determine that all packets are separately generated in which time of web page browsing; therefore, packets generated in a same time of web page browsing can be classified.

The calculating module 53 is configured to calculate a service quality indicator of the web page browsing according to the packets generated in the same time of web page browsing. The service quality indicator calculated by the calculating module 53 reflects service experience of a user in a process of one time of web page browsing from starting browsing to completing browsing. For example, the service quality indicator includes at least one of a web page response delay, a web page redirection delay, a web page data amount, a web page display delay, a web page display success rate, and the like.

According to the apparatus for calculating a service quality indicator in a web page browsing service in the present application, all packets generated in a same time of web page browsing are determined in multiple collected packets related to a web page browsing service, so that a service quality indicator of each time of web page browsing is calculated according to these packets, which can solve a problem in the prior art that a service quality indicator of one time of web page browsing cannot be calculated. The service quality indicator obtained by means of calculation can more truly reflect service experience of a user, so that an operator can accurately control the service experience of the user according to the service quality indicator.

Referring to FIG. 6, FIG. 6 is a schematic structural diagram of a second embodiment of an apparatus for calculating a service quality indicator in a web page browsing service according to the present application. The calculating apparatus includes a collecting module 61, an analyzing module 62, and a calculating module 63. The analyzing module 62 includes an extracting unit 621 and a comparing unit 622.

The collecting module 61 is configured to collect multiple packets related to a web page browsing service and send the multiple collected packets to the analyzing module 62.

The analyzing module 62 is configured to receive the multiple collected packets from the collecting module 61 and determine packets generated in a same time of web page browsing.

The calculating module 63 is configured to calculate a service quality indicator of the web page browsing according to the packets generated in the same time of web page browsing.

Specifically, the packets include a request packet and a response packet, and if a request packet is successfully fulfilled, the request packet has at least one corresponding response packet. The extracting unit 621 is configured to extract multiple request packets according to a preset sequence. Preferably, the preset sequence is a sequence of collection times of the request packets.

The comparing unit 622 is configured to sequentially compare a currently extracted request packet with a previously extracted request packet or a response packet corresponding to a previously extracted request packet, so as to determine whether the packets are generated in a same time of web page browsing. An object for comparison may be a collection time of a request packet or a response packet, or may be packet data of a request packet or a response packet. If two request packets are associated in collection time or packet data, it may be considered that the two request packets are generated in a same time of web page browsing.

The extracting unit 621 is further configured to: when the comparing unit 622 determines that the packets are generated in the same time of web page browsing, extract a next request packet for the comparing unit 621 to perform comparison.

Each time extracting a request packet, the extracting unit 621 sends the request packet to the comparing unit 622. After detecting that two request packets are consecutively received, the comparing unit 622 starts to perform comparison. In this embodiment, if determining for the first time that the currently extracted request packet and a request packet in the previously extracted request packet are generated in a same time of web page browsing, the comparing unit 622 stops comparison, and the extracting unit 621 continues to extract the next request packet.

Referring to FIG. 7, FIG. 7 is a schematic structural diagram of a third embodiment of an apparatus for calculating a service quality indicator in a web page browsing service according to the present application. The calculating apparatus includes a collecting module 71, an analyzing module 72, a calculating module 73, and a statistics collecting module 74. The analyzing module 72 includes an extracting unit 721, a comparing unit 722, and a sorting unit 723. The collecting module 71, the extracting unit 721, and the calculating module 73 have same technical features as the collecting module 61, the extracting unit 621, and the calculating module 63 of the previous embodiment, and details are not described herein again. A difference is that the comparing unit 722 further includes a first judging unit 731, a second judging unit 732, a third judging unit 733, and a determining unit 734.

The first judging unit 731 is configured to determine whether a time difference between a collection time of a currently extracted request packet and a collection time of a previously extracted request packet or a response packet corresponding to a previously extracted request packet is less than a first preset threshold. If the currently extracted request packet and the previously extracted request packet or the response packet corresponding to the previously extracted request packet are very close in collection time, it may be considered that the two request packets are generated in a same time of web page browsing. A preset threshold may be set to be as small as possible so as to improve accuracy of determining.

The second judging unit 732 is configured to: when the time difference is greater than or equal to the first preset threshold, compare first packet data of the currently extracted request packet with second packet data of the previously extracted request packet or third packet data of the response packet corresponding to the previously extracted request packet. In this embodiment, when the second judging unit 732 compares the first packet data with the second packet data, the first packet data is reference field information, and the second packet data is URL information or reference field information; or the first packet data is host field information, and the second packet data is host field information. In another embodiment, when the second judging unit 732 compares the first packet data with the third packet data, the first packet data is URL information, and the third packet data is location field information.

The third judging unit 733 is configured to: when the first packet data is the same as the second packet data, determine whether the time difference between the collection time of the currently extracted request packet and the collection time of the previously extracted request packet is less than a second preset threshold; or when the first packet data is the same as the third packet data, determine whether the time difference between the collection time of the currently extracted request packet and the collection time of the previously extracted request packet is less than a second preset threshold. The first preset threshold is less than the second preset threshold.

The determining unit 734 is further configured to: when the time difference is less than the first preset threshold, and the time difference is less than the second preset threshold in a case in which the first packet data is the same as the second packet data or the first packet data is the same as the third packet data, determine that the currently extracted request packet and the previously extracted request packet are generated in a same time of web page browsing. If the first packet data is not the same as the second packet data or the first packet data is not the same as the third packet data, or the time difference is greater than or equal to the second preset threshold, the determining unit 734 determines that the currently extracted request packet and the previously extracted request packet are not generated in a same time of web page browsing.

Packet data includes many types of field information, and most field information can be used for comparison. The following describes specific determining manners of the second judging unit 732. It is assumed that a user visits a particular portal site when browsing a web page, where a host address of the portal site is www.abc.com, the portal site includes a forum section and a news section, and the news section includes columns such as sports, entertainment, and education.

In the first determining manner, when the second judging unit 732 compares the first packet data with the third packet data, the first packet data is URL information, and the third packet data is location field information. If the location field information included in the response packet corresponding to the previously extracted request packet is www.abc.com, and the URL information of the currently extracted request packet is also www.abc.com, it may be determined that the currently extracted request packet is generated by redirection triggered by the previously extracted request packet, and it may be preliminarily considered that the two request packets are associated.

In the second determining manner, when the second judging unit 732 compares the first packet data with the second packet data, the first packet data is reference field information, and the second packet data is URL information. If the reference field information of the currently extracted request packet is the same as the URL information of the previously extracted request packet, it indicates that the currently extracted request packet can roll back to the URL information of the previously extracted request packet according to the reference field information of the currently extracted request packet, and it may be preliminarily considered that the two request packets are associated. For example, when the user browses the portal site and receives data of the news section, a browser automatically triggers a request and generates request packets, where these request packets request the columns such as sports, entertainment, and education. Therefore, reference field information of these request packets becomes URL information corresponding to the news section.

In the third determining manner, when the second judging unit 732 compares the first packet data with the second packet data, the first packet data is reference field information, and the second packet data is reference field information. When the user browses the portal site and receives data of the news section, a request is automatically triggered, and multiple request packets are generated. If the currently extracted request packet requests the sports column, and the previously extracted request packet requests the education column, reference field information of these request packets is the same and is URL information of the news section. Therefore, it may be preliminarily considered that the two request packets are associated.

In the fourth determining manner, when the second judging unit 732 compares the first packet data with the second packet data, the first packet data is host field information, and the second packet data is host field information. If the currently extracted request packet requests the news section, and the previously extracted request packet requests the forum section, host field information of these request packets is the same and is www.abc.com. Therefore, it may be preliminarily considered that the two request packets are associated.

After the determining unit 734 determines all request packets, the sorting unit 723 is configured to sort, according to a sequence of collection times, packets generated during each time of web page browsing. After sorting is performed, a request packet whose collection time is the earliest is the first request packet, and a response packet corresponding to the first request packet is the first response packet; a request packet whose collection time is the last is the last request packet, and a response packet corresponding to the last request packet is the last response packet.

After the calculating module 73 calculates a service quality indicator of each time of web page browsing, the statistics collecting module 74 is configured to collect statistics on an average value of service quality indicators of multiple times of web page browsing initiated from a same user address within a specific period of time at a same server address or a same host address, or an average value of service quality indicators of multiple times of web page browsing initiated from different user addresses at a same server address or a same host address. For example, the statistics collecting module 74 may specifically collect statistics on an average value of web page display delays at a same user address within a specific period of time at a same host address, an average value of web page response delays and web page display delays at multiple user addresses at a same server address, and the like.

Referring to FIG. 8, FIG. 8 is a schematic structural diagram of an embodiment of a communications system of the present application.

The communications system includes a calculating apparatus 80, user equipment 81, a wired or wireless network 82, and a network server 83. The calculating apparatus 80 is a calculating apparatus in any one of the foregoing embodiments. Only one user equipment 81 is schematically shown in the figure, but in another embodiment, there may be more than two user equipments 81. The user equipment 81 communicates with the network server 83 by using the wired or wireless network 82, so as to perform a web page browsing service.

In this embodiment, the calculating apparatus 80 accesses the wired or wireless network 82. In another embodiment, the calculating apparatus 80 may be disposed in the user equipment 81.

The calculating apparatus 80 accesses the wired or wireless network 82; therefore, a packet collected by the calculating apparatus 80 may belong to an unused user equipment 81. Therefore, in this embodiment, the calculating apparatus 80 collects multiple packets related to the web page browsing service according to a user address of each user equipment 81.

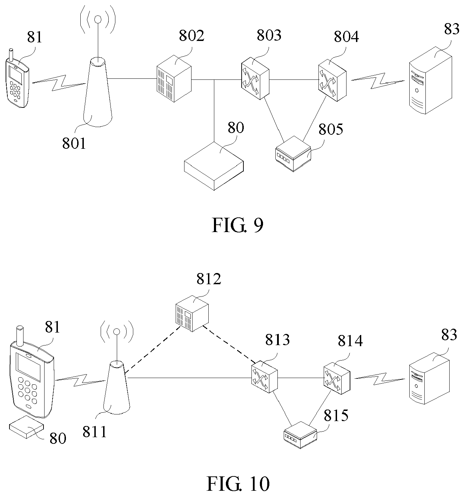

Referring to FIG. 9, FIG. 9 is a schematic diagram of an application scenario of the communications system shown in FIG. 8.

The communications system is used in a UMTS (Universal Mobile Telecommunications System, Universal Mobile Telecommunications System) network. The wired or wireless network 82 includes at least a wireless base station 801, a radio network controller (Radio Network Controller) 802, a serving GPRS (General Packet Radio Service, general packet radio service) support node 803, a gateway GPRS support node 804, and a home location register (Home Location Register) 805.

The user equipment 81 is linked to the wireless base station 801 by using a communications link, and the wireless base station 801, the radio network controller 802, the serving GPRS support node 803, and the gateway GPRS support node 804 are sequentially linked. The home location register 805 is linked to the serving GPRS support node 803 and the gateway GPRS support node 804. The network server 83 is linked to the gateway GPRS support node 804 by using a communications link.

Specifically, the wireless base station 801 is linked to the radio network controller 802 by using an Iub interface, where the Iub interface is a logical interface and used to complete data transmission. The radio network controller 802 is linked to the serving GPRS support node 803 by using an Iu-PS interface. The Iu-PS interface is a core network interface between the radio network controller 802 and a packet switched data network and used to complete data transmission. The serving GPRS support node 803 is linked to the gateway GPRS support node 804 by using a Gp interface. The Gp interface is a GPRS inter-network interface and used to complete communication between serving GPRS support nodes that belong to different public land mobile networks. In this embodiment, the calculating apparatus 80 accesses the Iu-PS interface. In another embodiment, the calculating apparatus 80 may access the Iub interface or the Gp interface.

Referring to FIG. 10, FIG. 10 is a schematic diagram of another application scenario of the communications system shown in FIG. 8.

The communications system is used in an LTE (Long Term Evolution, Long Term Evolution) network. The wired or wireless network 82 includes at least an evolved wireless base station 811, a mobility management entity (Mobility Management Entity) 812, a serving gateway 813, a packet data gateway 814, and a home location register 815. The evolved wireless base station 811 integrates some functions of a radio network controller and is mainly used for radio bearer control, wireless admission control, connection mobility control, and the like. The mobility management entity 812 is mainly used for access security control and idle state mobility control, and supports paging, handover, roaming, authentication, and the like. The serving gateway 813 is mainly used for packet data routing and forwarding. The packet data gateway 814 is mainly used for packet data filtering.

The user equipment 81 is linked to the evolved wireless base station 811 by using a communications link, and the evolved wireless base station 811, the mobility management entity 812, the serving gateway 813, and the packet data gateway 814 are sequentially linked. The home location register 805 is linked to both the serving gateway 813 and the packet data gateway 814. The network server 83 is linked to the packet data gateway 814 by using a communications link.

Specifically, the evolved wireless base station 811 is linked to the mobility management entity 812 by using an S1-MME interface, where the S1-MME interface is a control plane interface. The evolved wireless base station 811 is linked to the serving gateway 813 by using an S1-U interface, where the S1-U interface is a user plane interface. The mobility management entity 812 is linked to the serving gateway 813 by using an S11 interface. The serving gateway 813 is linked to the packet data gateway 814 by using an S5 interface. In this embodiment, the calculating apparatus 80 is disposed in the user equipment 81. In another embodiment, the calculating apparatus 80 may access the S1-MME interface, the S1-U interface, the S11 interface, or the S5 interface.

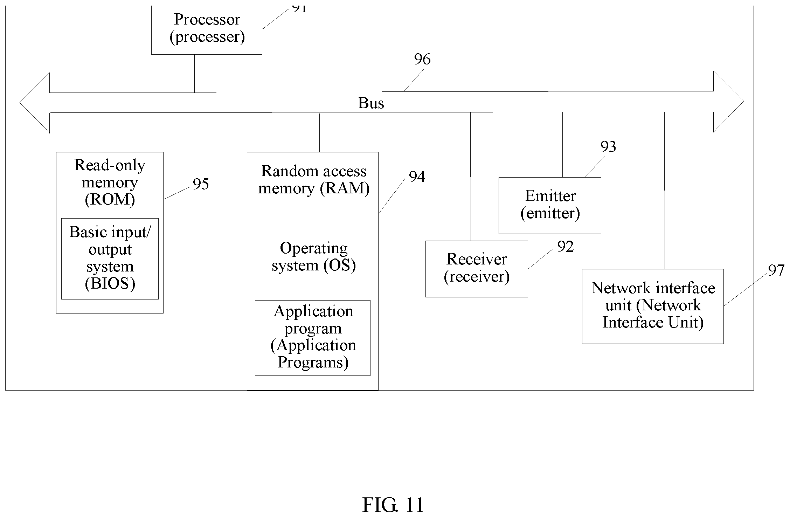

Referring to FIG. 11, FIG. 11 is a schematic structural diagram of a fourth embodiment of an apparatus for calculating a service quality indicator in a web page browsing service according to the present application.

The calculating apparatus includes a processor (processer) 91, a receiver (receiver) 92, an sender (emitter) 93, a random access memory (RAM) 94, a read-only memory (ROM) 95, a bus 96, and a network interface unit (Network Interface Unit) 97.

The processor 91 is coupled separately to the receiver 92, the emitter 93, the random access memory 94, the read-only memory 95, and the network interface unit 97 by using the bus 96.

When it is required to run the calculating apparatus, a basic input/output system (BIOS) that is built into the read-only memory 95 or a boot loader in an embedded system is used to lead a system to start, and lead the calculating apparatus to enter a normal running state. After the calculating apparatus enters the normal running state, an application program (Application Programs) and an operating system (OS) run in the random access memory 94 to receive data or send data, so that:
the receiver 92 collects multiple packets related to a web page browsing service by using the network interface unit 97; and
the processor 91 is configured to determine packets generated in a same time of web page browsing, and calculate a service quality indicator of the web page browsing according to the packets generated in the same time of web page browsing.

Specifically, the packets include a request packet and a response packet. The packets collected by the receiver 92 are stored in the random access memory 94. The processor 91 extracts a request packet from the random access memory 94 according to a preset sequence, and compares a currently extracted request packet with a previously extracted request packet or a response packet corresponding to a previously extracted request packet, so as to determine whether the packets are generated in a same time of web page browsing. If determining that the packets are generated in the same time of web page browsing, the processor 91 continues to extract a next request packet.

Comparison performed by the processor 91 includes multiple processes, which mainly are: determining whether a time difference between a collection time of the currently extracted request packet and a collection time of the previously extracted request packet or the response packet corresponding to the previously extracted request packet is less than a first preset threshold; if the time difference is greater than or equal to the first preset threshold, comparing first packet data of the currently extracted request packet with second packet data of the previously extracted request packet or third packet data of the response packet corresponding to the previously extracted request packet; if the first packet data is the same as the second packet data or the first packet data is the same as the third packet data, and the time difference is less than a second preset threshold, determining that the currently extracted request packet and the previously extracted request packet are generated in a same time of web page browsing. In addition, if the time difference is less than the first preset threshold, it is also determined that the currently extracted request packet and the previously extracted request packet are generated in the same time of web page browsing. Herein, if the processor 91 compares the first packet data with the third packet data, the first packet data is URL information, and the third packet data is location field information. If the processor 91 compares the first packet data with the second packet data, the first packet data is reference field information, and the second packet data is URL information or reference field information; or the first packet data is host field information, and the second packet data is host field information.

After calculating the service quality indicator, the processor 91 may send the service quality indicator by using the emitter 93 through the network interface unit 97.

For a specific implementation process of the processor 91, reference may be made to the calculating method and calculating apparatus in the foregoing embodiments, and details are not described herein again.

In the several embodiments provided in the present application, it should be understood that the disclosed system, apparatus, and method may be implemented in other manners. For example, the described apparatus embodiment is merely exemplary. For example, the module or unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present application essentially, or the part contributing to the prior art, or all or some of the technical solutions may be implemented in the form of a software product. The software product is stored in a storage medium and includes several instructions for instructing a computer device (which may be a personal computer, a management server, or a network device) or a processor (processor) to perform all or some of the steps of the methods described in the embodiments of the present application. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely embodiments of the present application, and are not intended to limit the protection scope of the present application. An equivalent structural or equivalent process alternation made by using the content of the specification and drawings of the present application, or an application of the content of the specification and drawings directly or indirectly to another related technical field, shall fall within the protection scope of the present application.

## Claims

1. A method for calculating a service quality indicator in a web page browsing service, comprising:
collecting (S110; S210) multiple packets related to the web page browsing service;
determining (S120) packets generated in a same time of web page browsing; and
calculating (S130) a service quality indicator of the web page browsing according to the packets generated in the same time of web page browsing, wherein the packets comprise a request packet and a response packet, and the step of the determining packets generated in a same time of web page browsing comprises:
sequentially comparing (S220) a currently extracted request packet with a previously extracted request packet or a response packet corresponding to a previously extracted request packet, so as to determine whether the packets are generated in the same time of web page browsing; and
if it is determined (S230) that the packets are generated in the same time of web page browsing, extracting a next request packet for comparison.

2. The calculating method according to claim 1, wherein the step of the sequentially comparing a currently extracted request packet with a previously extracted request packet or a response packet corresponding to a previously extracted request packet, so as to determine whether the packets are generated in the same time of web page browsing comprises:
determining whether a time difference between a collection time of the currently extracted request packet and a collection time of the previously extracted request packet or the response packet corresponding to the previously extracted request packet is less than a first preset threshold; and
if the time difference is less than the first preset threshold, determining that the currently extracted request packet and the previously extracted request packet are generated in the same time of web page browsing.

3. The calculating method according to claim 2, comprising:
if the time difference is greater than or equal to the first preset threshold, comparing first packet data of the currently extracted request packet with second packet data of the previously extracted request packet or third packet data of the response packet corresponding to the previously extracted request packet;
if the first packet data is the same as the second packet data, and the time difference between the collection time of the currently extracted request packet and the collection time of the previously extracted request packet is less than a second preset threshold, determining that the currently extracted request packet and the previously extracted request packet are generated in the same time of web page browsing; or
if the first packet data is the same as the third packet data, and the time difference between the collection time of the currently extracted request packet and the collection time of the response packet corresponding to the previously extracted request packet is less than a second preset threshold, determining that the currently extracted request packet and the previously extracted request packet are generated in the same time of web page browsing.

4. The calculating method according to claim 3, wherein if the first packet data is compared with the third packet data, the first packet data is uniform resource locator, URL, information, and the third packet data is location field information.

5. The calculating method according to claim 3, wherein if the first packet data is compared with the second packet data, the first packet data is reference field information, and the second packet data is URL information or reference field information; or the first packet data is host field information, and the second packet data is host field information.

6. The calculating method according to claim 3, wherein the first preset threshold is less than the second preset threshold.

7. An apparatus for calculating a service quality indicator in a web page browsing service, comprising a collecting module (51, 61), an analyzing module (52, 62), and a calculating module (53, 63), wherein:
the collecting module is configured to collect multiple packets related to the web page browsing service and send the multiple collected packets to the analyzing module;
the analyzing module is configured to receive the multiple collected packets from the collecting module and determine packets generated in a same time of web page browsing; and
the calculating module is configured to calculate a service quality indicator of the web page browsing according to the packets generated in the same time of web page browsing, wherein the packets comprise a request packet and a response packet, and the analyzing module (52, 62) comprises an extracting unit (621) and a comparing unit (622), wherein:
the extracting unit is configured to sequentially extract multiple request packets according to a preset sequence;
the comparing unit is configured to sequentially compare a currently extracted request packet with a previously extracted request packet or a response packet corresponding to a previously extracted request packet, so as to determine whether the packets are generated in a same time of web page browsing; and
the extracting unit is further configured to: when the comparing unit determines that the packets are generated in the same time of web page browsing, extract a next request packet for the comparing unit to perform comparison.

8. The calculating apparatus according to claim 7, wherein the comparing unit comprises a first judging unit and a determining unit, wherein:
the first judging unit is configured to determine whether a time difference between a collection time of the currently extracted request packet and a collection time of the previously extracted request packet or the response packet corresponding to the previously extracted request packet is less than a first preset threshold; and
the determining unit is configured to: when the time difference is less than the first preset threshold, determine that the currently extracted request packet and the previously extracted request packet are generated in the same time of web page browsing.

9. The calculating apparatus according to claim 8, wherein the comparing unit further comprises a second judging unit and a third judging unit, wherein:
the second judging unit is configured to: when the time difference is greater than or equal to the first preset threshold, compare first packet data of the currently extracted request packet with second packet data of the previously extracted request packet or third packet data of the response packet corresponding to the previously extracted request packet;
the third judging unit is configured to: when the first packet data is the same as the second packet data, determine whether the time difference between the collection time of the currently extracted request packet and the collection time of the previously extracted request packet is less than a second preset threshold; or when the first packet data is the same as the third packet data, determine whether the time difference between the collection time of the currently extracted request packet and the collection time of the previously extracted request packet is less than a second preset threshold; and
the determining unit is further configured to: when the third judging unit determines that the time difference is less than the second preset threshold, determine that the currently extracted request packet and the previously extracted request packet are generated in the same time of web page browsing.

10. The calculating apparatus according to claim 9, wherein when the second judging unit compares the first packet data with the third packet data, the first packet data is URL information, and the third packet data is location field information.

11. The calculating apparatus according to claim 9, wherein when the second judging unit compares the first packet data with the second packet data, the first packet data is reference field information, and the second packet data is URL information or reference field information; or the first packet data is host field information, and the second packet data is host field information.

12. The calculating apparatus according to claim 9, wherein the first preset threshold is less than the second preset threshold.

13. The calculating apparatus according to claim 7, wherein the analyzing module further comprises a sorting unit, wherein the sorting unit is configured to sort, according to a sequence of collection times, packets generated during each time of web page browsing.

## Patentansprüche

1. Verfahren zum Berechnen eines Dienstgüteindikators in einem Webseiten-Browsingdienst, umfassend:
Sammeln (S110; S210) mehrerer Pakete in Bezug auf den Webseiten-Browsinigdienst;
Bestimmen (S120) von Paketen, die zu einer selben Zeit des Webseiten-Browsens erzeugt werden; und
Berechnen (S130) eines Dienstgüteindikators des Webseiten-Browsens gemäß den zur selben Zeit des Webseiten-Browsens erzeugten Paketen, wobei die Pakete ein Anforderungspaket und ein Antwortpaket umfassen und der Schritt des Bestimmens von zu einer selben Zeit des Webseiten-Browsens erzeugten Paketen Folgendes umfasst:
sequentielles Vergleichen (S220) eines aktuell extrahierten Anforderungspakets mit einem zuvor extrahierten Anforderungspaket oder einem Antwortpaket, das einem zuvor extrahierten Anforderungspaket entspricht, um so zu bestimmen, ob die Pakete zur selben Zeit des Webseiten-Browsens erzeugt werden; und
wenn bestimmt wird (S230), dass die Pakete zur selben Zeit des Webseiten-Browsens erzeugt werden, Extrahieren eines nächsten Anforderungspakets zum Vergleich.

2. Berechnungsverfahren nach Anspruch 1, wobei der Schritt des sequentiellen Vergleichens eines aktuell extrahierten Anforderungspakets mit einem zuvor extrahierten Anforderungspaket oder einem Antwortpaket, das einem zuvor extrahierten Anforderungspaket entspricht, um so zu bestimmen, ob die Pakete zur selben Zeit des Web-Browsens erzeugt werden, Folgendes umfasst:
Bestimmen, ob eine Zeitdifferenz zwischen einer Sammelzeit des aktuell extrahierten Anforderungspakets und einer Sammelzeit des zuvor extrahierten Anforderungspakets oder des Antwortpakets, das dem zuvor extrahierten Anforderungspaket entspricht, kleiner als eine erste voreingestellte Schwelle ist; und
wenn die Zeitdifferenz kleiner als die erste voreingestellte Schwelle ist, Bestimmen, dass das aktuell extrahierte Anforderungspaket und das zuvor extrahierte Anforderungspaket zur selben Zeit des Webseiten-Browsens erzeugt werden.

3. Berechnungsverfahren nach Anspruch 2, umfassend:
wenn die Zeitdifferenz größer oder gleich der ersten voreingestellten Schwelle ist, Vergleichen von ersten Paketdaten des aktuell extrahierten Anforderungspakets mit zweiten Paketdaten des zuvor extrahierten Anforderungspakets oder dritten Paketdaten des Antwortpakets, das dem zuvor extrahierten Anforderungspaket entspricht;
wenn die ersten Paketdaten dieselben wie die zweiten Paketdaten sind und die Zeitdifferenz zwischen der Sammelzeit des aktuell extrahierten Anforderungspakets und der Sammelzeit des zuvor extrahierten Anforderungspakets kleiner als eine zweite voreingestellte Schwelle ist, Bestimmen, dass das aktuell extrahierte Anforderungspaket und das zuvor extrahierte Anforderungspaket zur selben Zeit des Webseiten-Browsens erzeugt werden; oder
wenn die ersten Paketdaten dieselben wie die dritten Paketdaten sind und die Zeitdifferenz zwischen der Sammelzeit des aktuell extrahierten Anforderungspakets und der Sammelzeit des Antwortpakets, das dem zuvor extrahierten Anforderungspaket entspricht, kleiner als eine zweite voreingestellte Schwelle ist, Bestimmen, dass das aktuell extrahierte Anforderungspaket und das zuvor extrahierte Anforderungspaket zur selben Zeit des Webseiten-Browsens erzeugt werden.

4. Berechnungsverfahren nach Anspruch 3, wobei, wenn die ersten Paketdaten mit den dritten Paketdaten verglichen werden, die ersten Paketdaten Informationen eines "Uniform Resource Locator" URL sind und die dritten Paketdaten Ortsfeldinformationen sind.

5. Berechnungsverfahren nach Anspruch 3, wobei, wenn die ersten Paketdaten mit den zweiten Paketdaten verglichen werden, die ersten Paketdaten Referenzfeldinformationen sind und die zweiten Paketdaten URL-Informationen oder Referenzfeldinformationen sind; oder die ersten Paketdaten Hostfeldinformationen sind und die zweiten Paketdaten Hostfeldinformationen sind.

6. Berechnungsverfahren nach Anspruch 3, wobei die erste voreingestellte Schwelle kleiner als die zweite voreingestellte Schwelle ist.

7. Vorrichtung zur Berechnung eines Dienstgüteindikators in einem Webseiten-Browsingdienst, die ein Sammelmodul (51, 61), ein Analysemodul (52, 62) und ein Berechnungsmodul (53, 63) umfasst, wobei
das Sammelmodul ausgelegt ist zum Sammeln mehrerer Pakete in Bezug auf den Webseiten-Browsingdienst und zum Senden der mehreren gesammelten Pakete zum Analysemodul;
das Analysemodul ausgelegt ist zum Empfangen der mehreren gesammelten Pakete von dem Sammelmodul und Bestimmen von Paketen, die zu einer selben Zeit des Webseiten-Browsens erzeugt werden; und
das Berechnungsmodul ausgelegt ist zum Berechnen eines Dienstgüteindikators des Webseiten-Browsens gemäß den zur selben Zeit des Webseiten-Browsens erzeugten Paketen, wobei die Pakete ein Anforderungspaket und ein Antwortpaket umfassen und das Analysemodul (52, 62) eine Extrahiereinheit (621) und eine Vergleichseinheit (622) umfasst, wobei
die Extrahiereinheit ausgelegt ist zum sequentiellen Extrahieren mehrerer Anforderungspakete gemäß einer voreingestellten Sequenz;
die Vergleichseinheit ausgelegt ist zum sequentiellen Vergleichen eines aktuell extrahierten Anforderungspakets mit einem zuvor extrahierten Anforderungspaket oder einem Antwortpaket, das einem zuvor extrahierten Anforderungspaket entspricht, um so zu bestimmen, ob die Pakete zur selben Zeit des Webseiten-Browsens erzeugt werden; und
die Extrahiereinheit ferner ausgelegt ist zum Extrahieren eines nächsten Anforderungspakets für die Vergleichseinheit zum Durchführen eines Vergleichs, wenn die Vergleichseinheit bestimmt, dass die Pakete zur selben Zeit des Webseiten-Browsens erzeugt werden.

8. Berechnungsvorrichtung nach Anspruch 7, wobei die Vergleichseinheit eine erste Beurteilungseinheit und eine Bestimmungseinheit umfasst, wobei
die erste Beurteilungseinheit ausgelegt ist zum
Bestimmen, ob eine Zeitdifferenz zwischen einer Sammelzeit des aktuell extrahierten Anforderungspakets und einer Sammelzeit des zuvor extrahierten Anforderungspakets oder des Antwortpakets, das dem zuvor extrahierten Anforderungspaket entspricht, kleiner als eine erste voreingestellte Schwelle ist; und die Bestimmungseinheit ausgelegt ist zum, wenn die Zeitdifferenz kleiner als die erste voreingestellte Schwelle ist, Bestimmen, dass das aktuell extrahierte Anforderungspaket und das zuvor extrahierte Anforderungspaket zur selben Zeit des Webseiten-Browsens erzeugt werden.

9. Berechnungsvorrichtung nach Anspruch 8, wobei die Vergleichseinheit ferner eine zweite Beurteilungseinheit und eine dritte Beurteilungseinheit umfasst, wobei
die zweite Beurteilungseinheit für Folgendes ausgelegt ist: wenn die Zeitdifferenz größer oder gleich der ersten voreingestellten Schwelle ist, Vergleichen von ersten Paketdaten des aktuell extrahierten Anforderungspakets mit zweiten Paketdaten des zuvor extrahierten Anforderungspakets oder dritten Paketdaten des Antwortpakets, das dem zuvor extrahierten Anforderungspaket entspricht;
die dritte Beurteilungseinheit für Folgendes ausgelegt ist: wenn die ersten Paketdaten dieselben wie die zweiten Paketdaten sind, Bestimmen, ob die Zeitdifferenz zwischen der Sammelzeit des aktuell extrahierten Anforderungspakets und der Sammelzeit des zuvor extrahierten Anforderungspakets kleiner als eine zweite voreingestellte Schwelle ist; oder wenn die ersten Paketdaten dieselben wie die dritten Paketdaten sind, Bestimmen, ob die Zeitdifferenz zwischen der Sammelzeit des aktuell extrahierten Anforderungspakets und der Sammelzeit des zuvor extrahierten Anforderungspakets kleiner als eine zweite voreingestellte Schwelle ist; und
die Bestimmungseinheit ferner für Folgendes ausgelegt ist: wenn die dritte Beurteilungseinheit bestimmt, dass die Zeitdifferenz kleiner als die zweite voreingestellte Schwelle ist, Bestimmen, dass das aktuell extrahierte Anforderungspaket und das zuvor extrahierte Anforderungspaket zur selben Zeit des Webseiten-Browsens erzeugt werden.

10. Berechnungsvorrichtung nach Anspruch 9, wobei, wenn die zweite Beurteilungseinheit die ersten Paketdaten mit den dritten Paketdaten vergleicht, die ersten Paketdaten URL-Informationen sind und die dritten Paketdaten Ortsfeldinformationen sind.

11. Berechnungsvorrichtung nach Anspruch 9, wobei, wenn die zweite Beurteilungseinheit die ersten Paketdaten mit den zweiten Paketdaten vergleicht, die ersten Paketdaten Referenzfeldinformationen sind und die zweiten Paketdaten URL-Informationen oder Referenzfeldinformationen sind; oder die ersten Paketdaten Hostfeldinformationen sind und die zweiten Paketdaten Hostfeldinformationen sind.

12. Berechnungsvorrichtung nach Anspruch 9, wobei die erste voreingestellte Schwelle kleiner als die zweite voreingestellte Schwelle ist.

13. Berechnungsvorrichtung nach Anspruch 7, wobei das Analysemodul ferner eine Sortiereinheit umfasst, wobei die Sortiereinheit ausgelegt ist zum Sortieren von während jeder Zeit des Webseiten-Browsens erzeugten Paketen gemäß einer Sequenz von Sammelzeiten.

## Revendications

1. Procédé de calcul d'un indicateur de qualité de service dans un service d'exploration de pages Web, comprenant les étapes suivantes :
collecte (S110 ; S210) de multiples paquets relatifs au service d'exploration de pages Web ;
détermination (S120) de paquets générés à un même moment d'exploration de pages Web ; et
calcul (S130) d'un indicateur de qualité de service de l'exploration de pages Web selon les paquets générés au même moment d'exploration de pages Web, les paquets comprenant un paquet de requête et un paquet de réponse, et l'étape de détermination de paquets générés à un même moment d'exploration de pages Web comprenant les étapes suivantes :
comparaison séquentielle (S220) d'un paquet de requête présentement extrait à un paquet de requête précédemment extrait ou à un paquet de réponse correspondant à un paquet de requête précédemment extrait, dans le but de déterminer si les paquets sont ou non générés au même moment d'exploration de pages Web ; et
s'il est déterminé (S230) que les paquets sont générés au même moment d'exploration de pages Web, extraction d'un paquet de requête suivant à des fins de comparaison.

2. Procédé de calcul selon la revendication 1, dans lequel l'étape de comparaison séquentielle d'un paquet de requête présentement extrait à un paquet de requête précédemment extrait ou à un paquet de réponse correspondant à un paquet de requête précédemment extrait, dans le but de déterminer si les paquets sont ou non générés au même moment d'exploration de pages Web comprend les étapes suivantes :
détermination si une différence de temps entre un temps de collecte du paquet de requête présentement extrait et un temps de collecte du paquet de requête précédemment extrait ou du paquet de réponse correspondant au paquet de requête précédemment extrait est inférieure ou non à un premier seuil préétabli ; et
si la différence de temps est inférieure au premier seuil préétabli, détermination que le paquet de requête présentement extrait et le paquet de requête précédemment extrait sont générés au même moment d'exploration de pages Web.

3. Procédé de calcul selon la revendication 2, comprenant les étapes suivantes :
si la différence de temps est supérieure ou égale au premier seuil préétabli, comparaison de premières données de paquet du paquet de requête présentement extrait à des deuxièmes données de paquet du paquet de requête précédemment extrait ou des troisièmes données de paquet du paquet de réponse correspondant au paquet de requête précédemment extrait ;
si les premières données de paquet sont identiques aux deuxièmes données de paquet, et la différence de temps entre le temps de collecte du paquet de requête présentement extrait et le temps de collecte du paquet de requête précédemment extrait est inférieure à un deuxième seuil préétabli, détermination que le paquet de requête présentement extrait et le paquet de requête précédemment extrait sont générés au même moment d'exploration de pages Web ; ou
si les premières données de paquet sont identiques aux troisièmes données de paquet, et la différence de temps entre le temps de collecte du paquet de requête présentement extrait et le temps de collecte du paquet de réponse correspondant au paquet de requête précédemment extrait est inférieure à un deuxième seuil préétabli, détermination que le paquet de requête présentement extrait et le paquet de requête précédemment extrait sont générés au même moment d'exploration de pages Web.

4. Procédé de calcul selon la revendication 3, dans lequel, si les premières données de paquet sont comparées aux troisièmes données de paquet, les premières données de paquet constituent des informations de localisateur uniforme de ressources, noté URL, et les troisièmes données de paquet constituent des informations de champ d'emplacement.

5. Procédé de calcul selon la revendication 3, dans lequel, si les premières données de paquet sont comparées aux deuxièmes données de paquet, les premières données de paquet constituent des informations de champ de référence et les deuxièmes données de paquet constituent des informations d'URL ou des informations de champ de référence ; ou les premières données de paquet constituent des informations de champ d'hôte et les deuxièmes données de paquet constituent des informations de champ d'hôte.

6. Procédé de calcul selon la revendication 3, dans lequel le premier seuil préétabli est inférieur au deuxième seuil préétabli.

7. Appareil de calcul d'un indicateur de qualité de service dans un service d'exploration de pages Web, comprenant un module de collecte (51, 61), un module d'analyse (52, 62) et un module de calcul (53, 63) :
le module de collecte étant configuré pour collecter de multiples paquets relatifs au service d'exploration de pages Web et envoyer les multiples paquets collectés au module d'analyse ;
le module d'analyse étant configuré pour recevoir les multiples paquets collectés en provenance du module de collecte et déterminer des paquets générés à un même moment d'exploration de pages Web ; et
le module de calcul étant configuré pour calculer un indicateur de qualité de service de l'exploration de pages Web selon les paquets générés au même moment d'exploration de pages Web, les paquets comprenant un paquet de requête et un paquet de réponse, et le module d'analyse (52, 62) comprenant une unité d'extraction (621) et une unité de comparaison (622) :
l'unité d'extraction étant configurée pour extraire séquentiellement de multiples paquets de requête selon une séquence préétablie ;
l'unité de comparaison étant configurée pour comparer séquentiellement un paquet de requête présentement extrait à un paquet de requête précédemment extrait ou à un paquet de réponse correspondant à un paquet de requête précédemment extrait, dans le but de déterminer si les paquets sont ou non générés à un même moment d'exploration de pages Web ; et
l'unité d'extraction étant configurée en outre pour : lorsque l'unité de comparaison détermine que les paquets sont générés au même moment d'exploration de pages Web, extraire un paquet de requête suivant pour permettre à l'unité de comparaison d'effectuer une comparaison.

8. Appareil de calcul selon la revendication 7, dans lequel l'unité de comparaison comprend une première unité d'évaluation et une unité de détermination :
la première unité d'évaluation étant configurée pour déterminer si une différence de temps entre un temps de collecte du paquet de requête présentement extrait et un temps de collecte du paquet de requête précédemment extrait ou du paquet de réponse correspondant au paquet de requête précédemment extrait est inférieure ou non à un premier seuil préétabli ; et
l'unité de détermination étant configurée pour : lorsque la différence de temps est inférieure au premier seuil préétabli, déterminer que le paquet de requête présentement extrait et le paquet de requête précédemment extrait sont générés au même moment d'exploration de pages Web.

9. Appareil de calcul selon la revendication 8, dans lequel l'unité de comparaison comprend en outre une deuxième unité d'évaluation et une troisième unité d'évaluation :
la deuxième unité d'évaluation étant configurée pour : lorsque la différence de temps est supérieure ou égale au premier seuil préétabli, comparer des premières données de paquet du paquet de requête présentement extrait à des deuxièmes données de paquet du paquet de requête précédemment extrait ou des troisièmes données de paquet du paquet de réponse correspondant au paquet de requête précédemment extrait ;
la troisième unité d'évaluation étant configurée pour : lorsque les premières données de paquet sont identiques aux deuxièmes données de paquet, déterminer si la différence de temps entre le temps de collecte du paquet de requête présentement extrait et le temps de collecte du paquet de requête précédemment extrait est inférieure ou non à un deuxième seuil préétabli ; ou, lorsque les premières données de paquet sont identiques aux troisièmes données de paquet, déterminer si la différence de temps entre le temps de collecte du paquet de requête présentement extrait et le temps de collecte du paquet de requête précédemment extrait est inférieure ou non à un deuxième seuil préétabli ; et
l'unité de détermination étant configurée en outre pour : lorsque la troisième unité d'évaluation détermine que la différence de temps est inférieure au deuxième seuil préétablie, déterminer que le paquet de requête présentement extrait et le paquet de requête précédemment extrait sont générés au même moment d'exploration de pages Web.

10. Appareil de calcul selon la revendication 9, dans lequel, lorsque la deuxième unité d'évaluation compare les premières données de paquet aux troisièmes données de paquet, les premières données de paquet constituent des informations d'URL, et les troisièmes données de paquet constituent des informations de champ d'emplacement.

11. Appareil de calcul selon la revendication 9, dans lequel, lorsque la deuxième unité d'évaluation compare les premières données de paquet aux deuxièmes données de paquet, les premières données de paquet constituent des informations de champ de référence et les deuxièmes données de paquet constituent des informations d'URL ou des informations de champ de référence ; ou les premières données de paquet constituent des informations de champ d'hôte et les deuxièmes données de paquet constituent des informations de champ d'hôte.

12. Appareil de calcul selon la revendication 9, dans lequel le premier seuil préétabli est inférieur au deuxième seuil préétabli.

13. Appareil de calcul selon la revendication 7, dans lequel le module d'analyse comprend en outre une unité de tri, l'unité de tri étant configurée pour trier, selon une séquence de temps de collecte, des paquets générés à chaque moment d'exploration de pages Web.
